# EUROPEAN PATENT APPLICATION

(11) **EP 1 121 968 A2**
(43) Date of publication of application: **08.08.2001**
(21) Application number: 01101516.1
(22) Date of filing: 24.01.2001
(51) Int. Cl.: B01D 39/20, B01D 53/04

(54) **Chemical filter and manufacturing method thereof**

(30) Priority: 31.01.2000 JP 2000021970; 21.02.2000 JP 2000042709
(71) Applicant: Nichias Co., Ltd., Tokyo 105-8555 (JP)
(72) Inventor: Tanaka, Minoru, c/o Nichias Co., Ltd., Yokohama-shi, Kanagawa 230-0053 (JP); Taniguchi, Takashi, c/o Nichias Co., Ltd., Yokohama-shi, Kanagawa 230-0053 (JP); Sasaki, Haruko, c/o Nichias Co., Ltd., Yokohama-shi, Kanagawa 230-0053 (JP); Nakano, Toshiro, c/o Nichias Co., Ltd., Yokohama-shi, Kanagawa 230-0053 (JP)
(74) Representative: Müller-Wolff, Thomas, Dipl.-Ing.

(57) **Abstract**

A chemical filter is provided with an adsorbent filter medium for removing gaseous impurities and agglutinating organic substances in the air. The adsorbent filter medium is of a corrugated honeycomb structure comprising fiber material and is a fiber base paper having an interfiber void ratio of 80 to 95% upon which a gas adsorbent or a gas reactant has been deposited. As a result, using fiber which contains substantially no boric oxide as the absorbent fiber medium enables contaminants generated from the chemical filter itself to be removed, and therefore improves the yield of semiconductors and precision electronic components manufactured. Moreover, the amount of active carbon deposited is markedly high, and thus, if impregnated with a reactant, the amount of reactant deposited is able to be increased, leading to superior removal performance with respect to gaseous contaminants as well as reduced pressure loss and longer life of the filter.

## Description

### Background of the Invention

The present invention relates to a chemical filter and manufacturing method thereof for an air cleaner used in a clean room or in a device which is used in a clean room of a semiconductor manufacturing plant or a precision electronics manufacturing plant, for removing substances that might be harmful to semiconductors and precision electronic components and removing microscopic amounts of gaseous impurities.

Semiconductors and precision electronic components and the like are generally manufactured in clean rooms at semiconductor manufacturing plants or precision electronics manufacturing plants. Clean rooms generally employ HEPA filters and ULPA filters to separate inside air from outside air so as to maintain an environment that is free or near free of dust. Despite this, however, it is not possible to completely prevent outside air from entering a clean room. Moreover, acidic substances, alkaline substances, and organic substances generated from the members that make up the clean room are dispersed into the air in the form of gases and minute particulates, causing defects. Various methods are employed to remove these contaminants, such as using a chemical filter in the clean room for low concentration levels on or below the ppb order. In addition, gaseous impurities that must be removed are also generated by devices installed within'the clean room which means that chemical filters must be installed in the devices themselves as well. While chemical filters do enable contaminants in the air within the clean room and devices to be removed, chemical filters themselves are a source of contamination as their construction material generate contaminants.

To solve this problem, a chemical filter and the like has been proposed (Japanese Patent Laid-Open Publication No. HEI 9-220425) that is provided with an adsorbent filter medium for removing gaseous impurities in the ventilating air and a filter medium comprising material which does not generate gaseous impurities and that is able to capture minute particulates generated from the adsorbent filter medium installed downstream of that adsorbent filter medium.

Even with this chemical filter installed, however, there are cases in which contaminants generated from the chemical filter itself are still not able to be sufficiently removed, which ultimately results in a decrease in yield of semiconductors and precision electronic components manufactured.

Further, in the manufacturing process of silicon wafers and so forth in semiconductor manufacturing plants, contaminants such as particulates and metal impurities in a clean room, which cause defects in devices with up to 64 megabytes of DRAM, are removed to an extremely high degree via HEPA filters and ULPA filters. Meanwhile, gaseous contaminants on the ppb level within a clean room are ultimately responsible for a reduction in the product yield of devices having 64 megabytes of DRAM or more. It is known that these gaseous contaminants come from various sources such as outside air, out gas from members that make up the clean room, and chemicals used in the manufacturing process.

Using chemical filters installed within the clean room is one method being used to remove low concentration levels of these gaseous contaminants of the ppb order or less. A chemical filter is a filter which removes gaseous contaminants by passing air in the clean room and in a device through a filter which is made of an adsorbent material such as active carbon. Gaseous contaminants are classified into acid, alkaline and organic substances. In order to efficiently remove these gaseous contaminants, a suitable adsorbent for adsorbing gas or a reactant for absorbing gas is usually selected to be used with the chemical filter.

For example, amines containing several tens of ppbs in the air enter the clean room along with the outside air. It is also known that basic gaseous contaminants such as amines are generated from chemicals used in the construction of clean rooms as well as in the manufacturing process. In a clean room, these basic gaseous contaminants which are 10 to 20 ppb cause photo resistance shape abnormalities (T top phenomenon), react with acidic gas to form salt, and generate condensation on the optical components of the systems used in the manufacturing process as well as on the surface of the silicon wafers. Using a chemical filter that deposits an acidic substance as a reactant for absorbing the gas enables basic gaseous contaminants such as amines to be removed. Meanwhile, acidic gaseous contaminants within a clean room promote the generation of boron by corroding glass fibers of dust removing filters, as well as cause metal corrosion of ICs and the like. To counteract these kinds of acidic gaseous contaminants, a chemical filter that deposits an alkali as a reactant for absorbing the gas is used to remove acidic gaseous contaminants.

Conventional chemical filters use granular active carbon charged in a filter case as a reactant for absorbing gas. These chemical filters, however, have several drawbacks. One such drawback is that the pressure loss is large. Furthermore, removal efficiency is poor due to the fact that the area of contact of the granular active carbon with the treated gas is small. While there are chemical filters of a honeycomb structure of corrugated nonwoven active carbon fiber, they have large pressure loss and are costly to manufacture. In order to maintain a high level of cleanliness in a clean room, air in the room is circulated by being passed through HEPA filters, ULPA filters, and chemical filters and so forth, but these filters have large pressure loss, require air blowers of increased capacity, and thus more energy for blowing the air.

In view of this, a chemical filter with little pressure loss, a large contact area and so forth has been proposed, wherein an organic fiber base paper containing granular active carbon to which a compound of active carbon powder and organic fiber has been added is formed into a honeycomb structure which is then impregnated with an aqueous solution in which inorganic acid and metallic salt able to neutralize gaseous contaminants are dissolved. Accordingly the chemical filter deposits a reactant such as this inorganic acid and metallic salt or the like in the active carbon. This chemical filter is advantageous in that it has a low density compared with a chemical filter having granular active carbon charged in the filter case, as well as enables pressure loss to be reduced.

Despite this, however, because a compound of organic fiber and active carbon has been added in the papermaking process, the amount of active carbon deposited on the aforementioned conventional chemical filter with the honeycomb structure is not able to be increased, with a large amount of active carbon deposited per unit area of paper being on the order of 40 g/m² with absorption on the order of 80 g/m². Accordingly, when the gas reactant is impregnated the amount of gas reactant deposited does not increase, it is difficult to achieve sufficient life of the filter and sufficient removal performance with respect to gaseous contaminants.

Therefore, an object of the present invention is to provide a chemical filter having superior removal performance with respect to gaseous contaminants while allowing only little pressure loss and having improved life, by markedly increasing the amount of active carbon or zeolite, which acts as an adsorbent, deposited such that the amount of reactant deposited is able to be increased when impregnated.

Another object of the present invention is to provide a chemical filter aimed at improving the yield in semiconductor and precision electronic component manufacturing by removing contaminants generated from the chemical filter itself.

### DISCLOSURE OF THE INVENTION

In view of the above, through dedicated study the inventors ultimately succeeded in creating a chemical filter of a corrugated honeycomb structure having an adsorbent filter medium for removing gaseous impurities and agglutinating organic substances in the air. With this chemical filter, a fiber base paper on which a large amount of an adsorbent is deposited is obtained by depositing an adsorbent such as active carbon or zeolite on a fiber base paper with an interfiber void fraction of 80 to 95% and charging it with a high ratio of the adsorbent so as to close the voids between the fibers. The fiber base paper is then formed into a corrugated honeycomb structure, upon which a gas reactant is then deposited. This results in a chemical filter which has superior performance in removing gaseous contaminants, reduced pressure loss, and a longer life, and is provided with an adsorbent filter medium for removing gaseous impurities and the like. By making the adsorbent filter medium of this chemical filter a corrugated honeycomb structure comprising fiber material and so as to contain substantially no boric oxide, it is possible to eliminate the discharge of boron compounds, or dopants, which are detrimental to semiconductors and precision electronic components, and therefore improve the yield of semiconductors and precision electronic components manufactured.

More specifically, one aspect of the present invention is a chemical filter having a corrugated honeycomb structure provided with an adsorbent filter medium for removing gaseous impurities and agglutinating organic substances in the air, wherein the adsorbent filter medium has a gas adsorbent or a gas adsorbent and a gas reactant deposited on fiber base paper with an interfiber void fraction of 80 to 95%.

A second aspect of the present invention is a method for manufacturing a chemical filter, comprising the steps of depositing active carbon or zeolite of an amount in a range between 40 and 150 g/m² per unit area of fiber base paper having an interfiber void ratio of 80 to 95% on the fiber base paper, then forming the fiber base paper on which the active carbon or the zeolite has been deposited into a corrugated honeycomb structure, and finally depositing a gas reactant on this corrugated honeycomb structure.

A third aspect of the present invention is a method for manufacturing a chemical filter, comprising the steps of depositing active carbon on fiber base paper having an interfiber void ratio of 80 to 95% such that an water-absorption amount becomes 100 to 160 g/m², then forming the fiber base paper upon which the active carbon has been deposited into a corrugated honeycomb structure with one or more types of adhesive selected from the group consisting of an organic system adhesive and an inorganic system adhesive which do not react with a gas reactant for absorbing basic gas and finally depositing a gas reactant for absorbing basic gas on said corrugated honeycomb structure.

A fourth aspect of the present invention is a chemical filter having an adsorbent filter medium for removing gaseous impurities and agglutinating organic substances in the air, wherein the adsorbent filter medium is of a corrugated honeycomb structure comprising fiber material and containing substantially no boric oxide.

### BRIEF DESCRIPTION OF THE DRAWINGS

Fig. 1 is a side view of a portion of the corrugated honeycomb structure obtained with embodiment 1; and

Fig. 2 is a view showing ammonia removal performance and pressure loss performance of the chemical filter in embodiment 1 and comparative examples 1 through 4.

### DETAILED DESCRIPTION

First, the chemical filter will be described with reference to the foregoing first, second, and third aspects of the present invention (hereinafter referred to as the first invention). The chemical filter according to the first invention is intended to be used to remove gaseous impurities and agglutinating organic substances from acidic gases and alkaline gases and so forth in the air. Here agglutinating organic substances refers to volatile organic substances floating in the air, wherein the surfaces thereof tend to agglutinate; e.g., dioctyl phthalate, dibutyl phthalate, dimethyl siloxane, hexamethyl disiloxane, N-methyl-2-pyrrolidone. The chemical filter is provided with an adsorbent filter medium for removing these gaseous impurities and agglutinating organic substances, and usually comprises an adsorbent filter medium and a member for depositing this adsorbent filter medium but is not limited thereto.

The adsorbent filter medium of the chemical filter according to the first invention is not particularly limited so long as it is a gas adsorbent or a gas adsorbent and a gas reactant deposited on a fiber base paper with an interfiber void fraction of 80 to 95% and is of a corrugated honeycomb structure. The fiber base paper is referred to as a woven or a nonwoven formed from fiber. Both inorganic fiber and organic fiber and the like may be used. Examples of inorganic fiber that may be used are glass fiber, such as E glass fiber, NCR fiber, ARG fiber, ECG fiber, S glass fiber, and A glass fiber, ceramic fiber, alumina fiber, mullite fiber, silica fiber, rock wool fiber, and carbon fiber. Examples of organic fiber that may be used are aramid fiber, nylon fiber, and polyethylene terephthalate fiber. It should be noted that while the invention is not limited to these inorganic fibers and organic fibers, a fiber length of 0.1 to 50 mm and a fiber diameter of 0.1 to 25 µm is preferable. One or a combination of two or more types of these inorganic fibers and organic fibers may be used.

The interfiber void fraction of the fiber base paper upon which the gas adsorbent or the gas adsorbent and the gas reactant is deposited is 80 to 95%, and more preferably 90 to 95%. Having the interfiber void fraction of the fiber based paper within this range enables the active carbon or zeolite to be filled at a high ratio so as to close the voids between the fibers when the active carbon or zeolite, which act as the gas adsorbent, is deposited by coating in the voids between the fibers. The interfiber void fraction refers to the fraction of the difference between the apparent volume and the volume occupied by the fiber within the fiber base paper with respect to the apparent volume of the fiber base paper.

A reactant which absorbs acidic gas and a reactant which absorbs basic substances are used as the gas reactant. An alkaline inorganic salt such as an alkali salt such as potassium carbonate can generally be used as the reactant for absorbing acidic gas. An inorganic acid such as sulfuric acid and an inorganic acid salt such as iron sulfate can generally be used as the reactant for absorbing basic gas.

The active carbon and the zeolite can be used as the gas adsorbent. The active carbon and the zeolite are used for adsorbing agglutinating organic substances. The chemical filter using the active carbon and/or the zeolite as the gas adsorbent can remove agglutinating organic substances without the reactant such as an acid or a base, because the active carbon and the zeolite physically adsorb agglutinating organic substances in their pores by van der Waals force and the like.

Next a method for manufacturing the chemical filter according to the first invention will be described. First a fiber base paper with an interfiber void fraction of 80 to 95% is obtained. The fiber used is identical to that mentioned above. A slurry is then formed by dispersing one or two or more types of the inorganic or organic fiber in a solution into which has been added an organic binder such as polyvinyl alcohol and polyacrylamide or methyl cellulose. When forming the slurry, for example, the compound content of the organic binder is 5 to 25 parts by weight, preferably 10 to 15 parts by weight relative to 100 parts by weight fiber, and the compound content of the fiber is 0.5 to 3 wt%, preferably 0.5 to 1 wt% in the slurry because they enable superior papermaking and highly even interfiber spacing to be achieved. Next, the slurry is made into a fiber base paper (nonwoven fabric) according to a known method using a papermaking machine such as a cylinder machine. Setting the compound content of the organic binder with respect to the fiber in the aforementioned range makes it easy to obtain a fiber base paper having an interfiber void fraction of 80 to 95%.

Next, active carbon or zeolite is deposited on the fiber base paper having an interfiber void fraction of 80 to 95% such that the deposited amount is within a range of 40 to 150 g/m² per unit area of the fiber base paper, preferably in a range of 60 to 120 g/m², and more preferably in a range of 80 to 120 g/m². Also the water-absorption amount of the active carbon or zeolite from this deposited active carbon or zeolite is 100 to 160 g/m², more preferably 120 to 150 g/m². Depositing active carbon powder or zeolite by coating it at a rate of 50 to 350 kg/m³, more preferably at a rate of 120 to 150 kg/m³ will enable the active carbon or zeolite to be deposited in this range. A deposition amount and water-absorption amount of the active carbon or zeolite in the above-mentioned ranges also increase the amount of impregnated gas reactant and enable superior gaseous contaminant removal performance to be achieved. The deposition method is a method for coating a suspended solution of the binder and active carbon powder or zeolite, and is preferable because a high ratio of active carbon is able to be deposited because the active carbon is charged so that it closes the voids between the fibers. A vinylidene chloride system binder or a vinyl chloride acrylic copolymerization system binder or the like may be used as the binder. Of these, a vinylidene chloride system binder is preferable because it displays excellent coating characteristics. Active carbon coated fiber base paper is then prepared by coating the fiber base paper with active carbon by application with a knife, brush, or roller, after which it is dried and heat treated. A temperature range of 70 to 120°C is sufficient for the heat treatment.

Continuing, the fiber base paper upon which the active carbon or zeolite is deposited is formed into a corrugated honeycomb structure. First, the fiber base paper upon which the active carbon or zeolite is deposited is divided into that which is to undergo the corrugation process and the part which is not. That which is to undergo the corrugation process is corrugated by being passed between a pair of upper and lower corrugated rollers. An adhesive is applied to the peaks of this corrugated fiber base paper which is then laid together with the flat fiber base paper that has not undergone the corrugation process so as to adhere the contacting portion of the peaks of the corrugated fiber base paper to the flat fiber base paper. Laminating a plurality of corrugated fiber base papers and the flat fiber base papers together creates a honeycomb structure having a specified open area ratio with respect to the direction of ventilation. An adhesive preferably used for adhesion should have suitable application and adhesion characteristics, and may be but is not limited to an organic adhesive such as a phenolic resin system, epoxy resin system, acrylic resin system, vinyl acetate resin system and a copolymer of these, or an inorganic adhesive such as silica sol or alumina sol. When a reactant for absorbing basic gases is used as a gas reactant, to be described later, the adhesive is preferably one or more types selected from the group consisting of an organic system adhesive or an inorganic system adhesive which will not react with the gas reactant for absorbing the basic gases. More specifically, it is preferable to use one or more types of an organic system adhesive selected from the group consisting of a phenol system resin, epoxy system resin, acrylic system resin and a copolymer of these, or one or more types of an inorganic system adhesive selected from the group consisting of silica sol and alumina sol, because they retard a hydrolytic reaction with the gas reactant. Also particularly preferable as an adhesive is an acrylic system copolymer resin. In addition, acid resistance can be further improved by using an acrylic system copolymer resin together with an inorganic adhesive. The cross sectional shape of the honeycomb structure may be circular or quadrangular or the like but is not limited thereto.

Next for example, the gas reactant is deposited onto the corrugated honeycomb structure. A gas reactant mentioned above can be used here. Acidic or alkaline substances may be added as necessary to the adsorbent filter medium for depositing the gas reactant on the corrugated honeycomb structure. That is, a gas reactant to which an acidic compound has been added, for example, may be used when the gaseous contaminants are basic gases and a gas reactant to which a basic compound has been added may be used when the gaseous contaminants are acidic. Known types of gas reactants or gas adsorbents and impregnation and deposition methods are applicable to this invention. For example, an adsorbent filter medium containing acid as a gas reactant may be obtained by submersing the honeycomb structure for from several minutes to several hours in an aqueous solution with a sulfuric acid content of several percent to several tens of percents or by absorption deposition by a washcoating or the like and then drying it. Also for example, an adsorbent filter medium containing alkali as a gas reactant may be obtained by submersing the honeycomb structure for from several minutes to several hours in an aqueous solution with a potassium carbonate content of several percent to several tens of percents or by absorption deposition by a washcoating or the like and then drying it. A suitable solution for dissolving the gas reactant, such as water or alcohol, is used. With the method of the first invention, impregnating the gas reactant after the honeycomb structure is formed prevents the gas reactant from desorbing, therefore enabling a constant amount of deposition.

The chemical filter according to the first invention comprises a corrugated honeycomb structure which acts as the adsorbent filter medium and a deposit member (casing) for depositing the adsorbent filter medium. The deposition member functions both to deposit the corrugated honeycomb structure and join the chemical filter to existing equipment (at the location of installation). The treated air ventilation portion of the deposition member is made of material such as degassed stainless steel, aluminum, or plastic.

The chemical filter according to the first invention is further able to be provided with a dust removing filter for capturing at least minute particulates generated by the adsorbent filter medium downstream of the adsorbent filter medium. This enables particulate impurities generated by the adsorbent filter medium provided earlier in the path with respect to the direction of airflow to be removed by the dust removing filter provided later in the path. Providing the chemical filter according to the first invention in a device or clean room of a semiconductor manufacturing plant further improves the yield of semiconductors and precision electronic components manufactured.

The chemical filter according to the first invention is preferably used as an air cleaner installed, for example, inside a device installed in a clean room or in a clean room of a semiconductor manufacturing plant or a precision electronic components manufacturing plant. This results in excellent gaseous contaminants removal performance, little pressure loss, and improved life of the filter. Accordingly, contaminants are removed from the semiconductors and precision electronic components thereby improving the yield.

Next, the chemical filter according to the fourth aspect of the invention (hereinafter also referred to as the second invention) will hereinafter be described. The chemical filter according to the second invention is intended to be used to remove gaseous impurities and agglutinating organic substances of acidic gas and alkaline gas and the like in the air. The agglutinating organic substances referred to here are the same as those in the first invention. The chemical filter is provided with an adsorbent filter medium having a corrugated honeycomb structure for removing these gaseous impurities and agglutinating organic substances, and usually comprises an adsorbent filter medium and a member for depositing this adsorbent filter medium.

According to the second invention, the adsorbent filter medium is not particularly limited so long as it is a corrugated honeycomb structure comprising a fiber material which contains substantially no boric oxide. Examples of fiber material which contains substantially no boric oxide that may be used are glass fiber containing substantially no boron, such as NCR fiber, ARG fiber, ECG fiber, S glass fiber, and A glass fiber, ceramic fiber, alumina fiber, mullite fiber, silica fiber, rock wool fiber, carbon fiber, and organic fiber. Examples of organic fiber that may be used are aramid fiber, nylon fiber, and polyethylene terephthalate fiber. It should be noted that while the invention is not limited to these fibers, either short fibers of a length of 10 µm to 5 mm or long fibers of a length of 1 mm to 5 cm, which have a diameter of 1 to 50 µm are preferable. One or a combination of two or more types of these inorganic fibers and organic fibers can also be used. By using this adsorbent filter medium comprising fiber material which contains substantially no boric oxide, it is possible to eliminate the discharge of boric oxide, which has eluted from acid such as a minute amount of hydrofluoric acid or water or the like generated in the semiconductor manufacturing process to become a boron compound, from the adsorbent filter medium. As a result, installing a chemical filter which uses the adsorbent filter medium in, for example, a clean room of a semiconductor manufacturing plant, prevents a decline in yield of the semiconductors manufactured.

The adsorbent filter medium used may have an acidic or alkaline substance added to the active carbon or zeolite or have an ion exchanger deposited thereon. Known types of these adsorbents and impregnation and deposition methods are applicable to this invention. For example, an adsorbent filter medium containing active carbon or zeolite can be obtained by applying spheroid or granular active carbon or zeolite to a nonwoven fabric of which the aforementioned fibers were obtained according to a papermaking method, drying the applied active carbon or zeolite, and creating a honeycomb structure. Also, an adsorbent filter medium containing acid can be obtained, for example, by applying spheroid or granular active carbon or zeolite to a nonwoven fabric of which the aforementioned fibers were obtained according to a papermaking method, drying the applied active carbon or zeolite, then creating a honeycomb structure, submersing the honeycomb structure for from several minutes to several hours in an aqueous solution with a sulfuric acid content of several percent to several tens of percents, and then taking it out and drying it. An adsorbent filter medium containing alkali can also be obtained, for example, by applying spheroid or granular active carbon or zeolite to a nonwoven fabric of which the aforementioned fibers were obtained according to a papermaking method, drying the applied active carbon or zeolite, then creating a honeycomb structure, submersing the honeycomb structure for from several minutes to several hours in an aqueous solution with a potassium carbonate content of several percent to several tens of percents, and then taking it out and drying it.

The adsorbent filter medium according to the second invention contains substantially no boric oxide or boron. The phrase "contains substantially no boric oxide or boron" here refers to a level of contamination in which no eluted boron compounds are able to be detected by ICP emission analysis when the adsorbent filter medium is treated in air containing acid and water. More specifically, the boric oxide and boron content within the adsorbent filter medium is preferably 1 g per 1 µg or less, more preferably 1 g per 0.5 µg or less, and most preferably 0.

When gas of a hydrogen fluoride content of 1 ppm is passed through the adsorbent filter medium at a face velocity of 0.5 m/s for one hour, the boron content of the gas which has passed through the adsorbent filter medium is preferably 1 µg or less per 1 g of the adsorbent filter medium, more preferably 0.5 µg or less (hereinafter referred to as the acidic gas exposure test). Specifically in this acidic gas exposure test, a piece of adsorbent filter medium 20 mm in diameter having a honeycomb structure is cut out and its weight is measured. Then the cut out piece of adsorbent filter medium is installed in a Teflon tube having an inner diameter of 20 mm. A mixture of hydrogen fluoride and dry air (gas prepared so that the hydrogen fluoride content is 1 ppm) is introduced into the Teflon tube at a face velocity of 0.5 m/s and passed therethrough for one hour. The mixed gas which has passed through the adsorbent filter medium is blown into 10 to several tens of milliliters of deionized water, solution scavenged, and concentrated, after which an ICP emission analysis is conducted to measure the boron compound (boron fluoride) content. Also, in the acidic gas exposure test, a gas that is a mixture of hydrogen chloride and dry air, which has been prepared so as to have a hydrogen chloride content of 1 ppm, may alternatively be used instead of the hydrogen fluoride. In this case, the scavenging solution used may be an aqueous 1% hydrofluoric acid solution. Moreover, the acidic gas exposure test may also be an alkaline gas exposure test. That is, a gas which is a mixture of ammonia gas and dry air, which has been prepared so as to have an ammonia content of 1 ppm, may be used instead of the hydrogen fluoride. In this case, the scavenging solution used may be an aqueous 1% hydrofluoric acid solution. When using the above-mentioned hydrogen chloride gas or ammonia gas with the adsorbent filter medium according to the second invention, the boron content in either gas which has passed through the adsorbent filter medium is preferably 1 µg or less per 1 g of the adsorbent filter medium, more preferably 0.5 µg or less. If this boron content exceeds 1 µg per 1 g of the adsorbent filter medium when a chemical filter using the adsorbent filter medium is installed in a clean room of a semiconductor manufacturing plant, for example, extremely minute amounts of boron compound in the gas treated by the adsorbent filter medium may be dispersed into the air, having undesirable effects such as contaminating semiconductor components and decreasing the product yield.

An example of manufacture of the corrugated honeycomb structure comprising fiber material will be hereinafter described. First, one or two or more types of fiber selected from the group consisting of glass fiber containing substantially no boron, such as NCR fiber, ARG fiber, ECR fiber, S glass fiber, and A glass fiber, and ceramic fiber, alumina fiber, mullite fiber, silica fiber, rock wool fiber, carbon fiber, and organic fiber and the like, is dispersed in a solution to which has been added an organic binder such as polyvinyl alcohol or acrylic vinylidene chloride cellulose or the like, so as to form a slurry. When preparing this slurry, the compound content of the organic binder is 0.1 to 10 parts by weight, preferably 0.5 to 5 parts by weight relative to 100 parts by weight fiber, and the compound content of the fiber is 0.01 to 5 wt%, preferably 0.5 to 3 wt%, more preferably 0.5 to 1 wt% in the slurry because this enables better fiber hardness and dispersal characteristics. Next, the slurry is used to prepare a nonwoven fabric according to a known papermaking method using a papermaking machine such as a cylinder machine.
The active carbon coated nonwoven fabric is prepared by applying active carbon to the nonwoven fabric so as to be 40 to 150 g/m², preferably 60 to 120 g/m², more preferably 80 to 120, and then drying the active carbon.

The active carbon coated nonwoven fabric is divided into that which is to undergo the corrugation process and that which is not. That which is to undergo the corrugation process is corrugated by being passed between a pair of upper and lower corrugated rollers. An adhesive is applied to the peaks of this corrugated active carbon coated nonwoven fabric which is then laid together with the flat active carbon coated nonwoven fabric that has not undergone the corrugation process, so as to adhere the contacting portion of the peaks of the corrugated active carbon coated nonwoven fabric to the flat active carbon coated nonwoven fabric. A plurality of the corrugated active carbon coated nonwoven fabric is thus repeatedly laminated together with the flat active carbon coated nonwoven fabric as appropriate so as to obtain a chemical filter comprising a corrugated honeycomb structure. The adhesive to be used for adhesion can be but is not limited to an organic adhesive such as a vinyl acetate system or an acrylic system, or an inorganic adhesive such as colloidal silica or sodium silicate. The cross sectional shape of the honeycomb structure may be triangular, circular, or quadrangular or the like but is not particularly limited thereto.

The chemical filter according to the second invention comprises a corrugated honeycomb structure which acts as the adsorbent filter medium and a deposition member (casing) for depositing the adsorbent filter medium. The deposition member functions both to deposit the corrugated honeycomb structure and join the chemical filter to existing equipment (at the location of installation). The treated air ventilation portion of the deposition member is made of material such as degassed stainless steel, aluminum, or plastic.

The chemical filter according to the second invention is further able to be provided with filter material for capturing at least minute particulates generated by the adsorbent filter medium downstream of the adsorbent filter medium. As a result, the adsorbent filter medium provided earlier in the path with respect to the direction of airflow makes it possible to eliminate the discharge of boron compounds, or dopants, which are particularly detrimental to semiconductors and precision electronic components, whereas the filter material provided later in the path makes it possible to remove particulate impurities generated by the adsorbent filter medium. Therefore providing this chemical filter in a clean room of a semiconductor manufacturing plant, for example, improves the yield of semiconductors and precision electronic components manufactured.

The filter material is not particularly limited so long as it captures at the very least minute particulates generated by the adsorbent filter medium. Possibilities to be used as the filter material which contains substantially no boric oxide are woven fabric or nonwoven fabric made of glass fiber which contains substantially no boron, such as NCR fiber, ARG fiber, ECG fiber, S glass fiber, and A glass fiber, ceramic fiber, alumina fiber, mullite fiber, silica fiber, rock wool fiber, carbon fiber, and organic fiber and the like. Examples of organic fiber that may be used are aramid fiber, nylon fiber, and polyethylene teraphthalate fiber. One or a combination of two or more types of these filter materials can be used. It should be noted that the invention is not limited to these filter materials. Alternatively, a film such as an organic film may be used for example. The filter material, along with typically the frame and gasket, makes up the filter.

The chemical filter according to the second invention is preferably used as an air cleaner installed, for example, inside a device installed in a clean room or in a clean room of a semiconductor manufacturing plant or a precision electronic components manufacturing plant. This is advantageous because the chemical filter removes substances that might be harmful to the semiconductors and precision electronic components, thereby improving the yield.

Next, the present invention will be described in more detail in the following embodiments. It should be noted that these embodiments serve only as examples and do not in any way limit the present invention.

### EXAMPLE 1

### (Manufacture of the Chemical Filter)

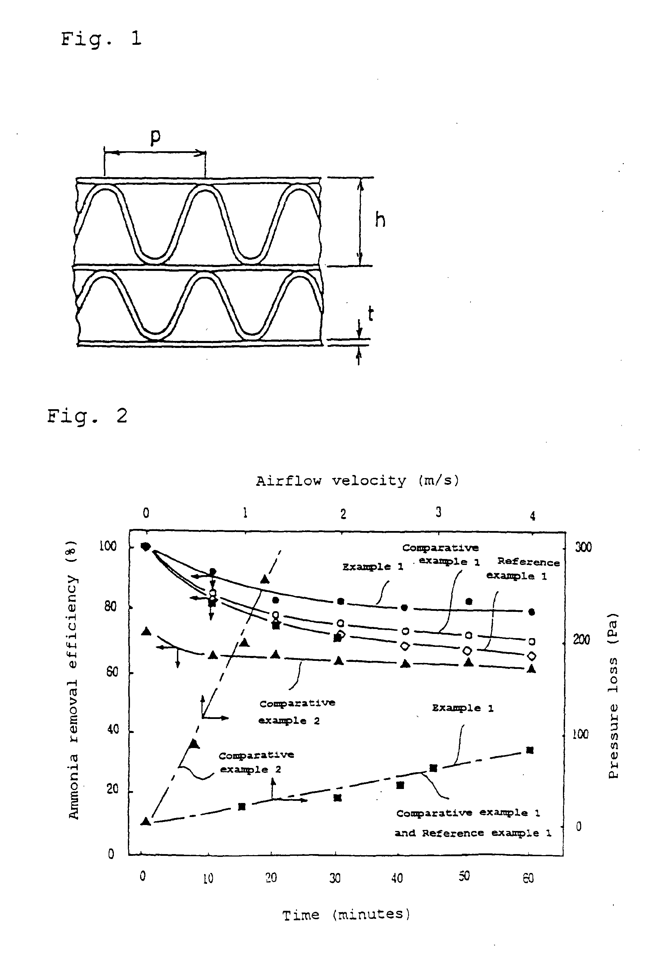

An E glass fiber was dispersed so as to be 1 wt% in the slurry in a solution to which 10 parts by weight polyvinyl alcohol as a binder relative to 100 parts by weight fiber had been added. The papermaking process was then performed according to the usual method using a cylinder machine so as to obtain an E glass fiber base paper having an interfiber void fraction of 90%. Next, the E glass fiber base paper was coated with suspension containing active carbon powder and a vinylidenechloride system binder so that the amount of carbon deposition was 90 g/m² (water-absorption amount of 120 g/m²). An active carbon coated glass fiber base paper was then prepared by drying and treating this coated E glass fiber base paper at a temperature of 110°C. This active carbon coated glass fiber base paper was then divided into that which was to undergo the corrugation process and that which was not. That which was to undergo the corrugation process was corrugated by being passed between a pair of upper and lower corrugated rollers. An acrylic resin adhesive was applied to the peaks of this corrugated active carbon coated glass fiber base paper which was then laid together with and laminated to the flat active carbon coated glass fiber base paper that had not undergone the corrugation process. This was then repeated until a flat honeycomb structure which was a laminated body with a corrugation pitch (p) of 3.3 mm, a cell height (h) of 1.9 mm, and a wall thickness (t) of 0.3 mm was obtained (Fig. 1). The flat honeycomb structure was then impregnated with aqueous 5% sulfuric acid solution as a reactant for adsorbing gas and dried to create a chemical filter intended to remove ammonia as an alkaline contaminant. The amount of sulfuric acid deposition at that time was 20 kg/m³.

### (Performance Test I)

The chemical filter for removing ammonia prepared in Example 1 was evaluated under the following test conditions in terms of its ammonia removal efficiency by measuring over time the ammonia content in the air which had passed through the chemical filter. In actuality, an ammonia content of several tens of ppbs is detrimental in clean rooms so in this test measurements were taken with an experimental concentration of 20 ppm. The results of the test are shown in Fig. 2. The ammonia removal efficiency after 60 minutes had passed was able to be maintained at 80%.

### <Test Conditions>

Airflow velocity: 0.3 m/s
Airflow ammonium content: 20 ppm
Thickness of honeycomb structure in the direction of airflow: 10 mm
Time of airflow: 0 to 60 minutes

### (Performance Test II)

The chemical filter for removing ammonia prepared in Example 1 was evaluated under the following test conditions in terms of pressure loss (Pa) following an increase in airflow velocity (m/s) through the chemical filter. The results of the test are shown in Fig. 2. Pressure loss was able to be maintained below 100 Pa even when the airflow velocity was 4 m/s.

### <Test Conditions>

Airflow face velocity: 0 to 4 m/s
Thickness of honeycomb structure in the direction of airflow: 40 mm

### COMPARATIVE EXAMPLE 1

The method and evaluation was identical to that in Example 1 except that E glass fiber base paper having an interfiber void fraction of 60% was used instead of the E glass fiber base paper having an interfiber void fraction of 90%. The amount of sulfuric acid deposition on this chemical filter was 10 kg/m³. The results of the test are shown in Fig. 2. Although the results show that the pressure loss was below 100 Pa even when the airflow velocity was 4 m/s, just as in Example 1, the ammonia removal efficiency after 60 minutes had passed was 70%, which is declined compared with that of Example 1.

### COMPARATIVE EXAMPLE 2

Granular active carbon having a diameter of approximately 5 mm was impregnated with an aqueous 5% sulfuric acid solution and dried. A chemical filter for removing basic gas was then prepared by charging the granular active carbon upon which this sulfuric acid had been deposited into a filter case. The amount of sulfuric acid deposition on the chemical filter was 10 kg/m³. The evaluation method for the chemical filter was identical to that in Example 1. The results of the test are shown in Fig. 2. The ammonia removal efficiency after 60 minutes had passed was on the order of 60%, which is worse than that of Example 1. The airflow velocity was also 1.5 m/s and the pressure loss exceeded 300 Pa.

### REFERENCE EXAMPLE 1

An active carbon powder was impregnated with an aqueous 5% sulfuric acid solution and dried to obtain a sulfuric acid deposited active carbon in advance. An E glass fiber base paper identical to that obtained in Example 1 was coated with an amount identical to that in Example 1 of a suspension containing this sulfuric acid deposited active carbon and a vinylidene chloride system binder. An active carbon coated glass fiber base paper was prepared by drying and treating this coated E glass fiber base paper at a temperature of 110°C. A flat honeycomb structure of the same structure made according to the same method as that in Example 1 was obtained using this active carbon coated glass fiber base paper, and a chemical filter intended to remove ammonium as an alkaline contaminant was prepared. The amount of sulfuric acid deposition at that time was 8 kg/m³. As is evident, the amount of sulfuric acid deposition is less than that in Example 1 because the sulfuric acid runs out of the suspension thus reducing the deposition amount when the suspension (slurry) is prepared according to the method wherein the E glass fiber base paper is coated with active carbon impregnated with sulfuric acid in advance, as in this comparative example. The evaluation method for this chemical filter was identical to that in Example 1. The results of the test are shown in Fig. 2. Compared with Example 1, the pressure loss was approximately the same but the ammonia removal efficiency after 60 minutes had passed was worse, on the order of 65%.

### EXAMPLE 2

### (Manufacture of Adsorbent Filter Medium (Honeycomb Structure))

ARG fiber (containing 0.08 ppm boric oxide), which is a glass fiber, is dispersed in a solution to which 2 wt% polyvinyl alcohol as a binder in the slurry had been added. The papermaking process was then performed according to the usual method using a cylinder machine so as to obtain glass paper. An active carbon coated glass paper was then prepared by coating the glass paper with 100 g/m² of (spheroid) active carbon and drying it. This active carbon coated glass paper was then divided into that which was to undergo the corrugation process and that which was not. That which was to undergo the corrugation process was corrugated by being passed between a pair of upper and lower corrugated rollers. An vinyl acetate system adhesive was applied to the peaks of this corrugated active carbon coated glass paper which was then laid together with and laminated to the flat active carbon coated glass paper that had not undergone the corrugation process. This was then repeated until a flat honeycomb structure A which was a laminated body with a corrugation pitch of 2.8 mm and a peak height of 1.3 mm was obtained. A hydrogen fluoride gas exposure test with the following conditions was then conducted on the flat honeycomb structure A and the amount of boron compounds, or dopants, contained in the adsorbent filter medium treated gas was measured. It was confirmed that the boron compound content in the adsorbent filter medium treated gas was equal to or less than the measurable limit with analytical instruments and there was no generation of boron fluoride gas even when exposed to the hydrogen fluoride gas.

### (Hydrogen Fluoride Gas Exposure Test)

A piece of adsorbent filter medium 20 mm in diameter having a honeycomb structure was cut out and its weight was measured. Then the cut out piece of adsorbent filter medium was installed in a Teflon tube having an inner diameter of 20 mm. A mixture of hydrogen fluoride and dry air (gas prepared so that the hydrogen fluoride content was 1 ppm) was introduced into the Teflon tube at a face velocity of 0.5 m/s and passed therethrough for one hour. The mixed gas which had passed through the adsorbent filter medium was blown into 10 milliliters of deionized water, solution scavenged, and concentrated, after which an ICP emission analysis was conducted to measure the boron fluoride content (µg). The boron content per 1 g of adsorbent filter medium was evaluated by dividing the measured value by the weight of the adsorbent filter medium.

### EXAMPLE 3

A flat honeycomb structure B was prepared using the same method as in Example 2 except that ceramic fiber (boric oxide content of 0.1 ppm) was used instead of ARG fiber, and the same hydrogen fluoride gas exposure test was conducted. It was confirmed that the boron compound content in the adsorbent filter medium treated gas was equal to or less than the measurable limit with analytical instruments and there was no generation of boron fluoride gas even when exposed to the hydrogen fluoride gas.

### EXAMPLE 4

A flat honeycomb structure C was prepared using the same method as in Example 2 except that S glass fiber (boric oxide content of 0.07 ppm) was used instead of ARG fiber, and the same hydrogen fluoride gas exposure test was conducted. It was confirmed that the boron compound content in the adsorbent filter medium treated gas was equal to or less than the measurable limit with analytical instruments and there was no generation of boron fluoride gas even when exposed to the hydrogen fluoride gas.

### COMPARATIVE EXAMPLE 3

A flat honeycomb structure D was prepared using the same method as in Example 2 except that E glass fiber (boric oxide content of 7.6%) was used instead of ARG fiber, and the same hydrogen fluoride gas exposure test was conducted. The boron compound content in the adsorbent filter medium treated gas was 7.9 mg per 1 g of adsorbent filter medium.

### EXAMPLE 5

### (Manufacture of Adsorbent Filter Medium (Honeycomb Structure))

ECR fiber (boric oxide content of 0.1 ppm), which is a glass fiber, was dispersed in a solution to which 3 wt% polyvinyl alcohol as a binder in the slurry had been added. The papermaking process was then performed according to the usual method using a cylinder machine so as to obtain glass paper. An active carbon coated glass paper was then prepared by coating the glass paper with 100 g/m² of (spheroid) active carbon and drying it. This active carbon coated glass paper was then divided into that which was to undergo the corrugation process and that which was not. That which was to undergo the corrugation process was corrugated by being passed between a pair of upper and lower corrugated rollers. An vinyl acetate system adhesive was applied to the peaks of this corrugated active carbon coated glass paper which was then laid together with and laminated to the flat active carbon coated glass paper that had not undergone the corrugation process. This was then repeated until a flat honeycomb structure which was a laminated body with a corrugation pitch of 2.2 mm and a peak height of 1.0 mm was obtained. Meanwhile, a slurry was prepared in which 18 wt% was zeolite content, 60 wt% was silica sol content (SiO₂ content of 20%), and the remainder was water. A honeycomb structure E upon which was deposited 80 g/m² of zeolite was then obtained by submersing a honeycomb structure E in this slurry, taking it out and drying it at a temperature of 250°C, and then removing the organic elements from within the laminated body. A hydrogen chloride gas exposure test with the following conditions was then conducted on the flat honeycomb structure E and the boron content in the adsorbent filter medium treated gas was measured. It was confirmed that the boron content in the adsorbent filter medium treated gas was equal to or less than the measurable limit with analytical instruments and there was no generation of boric oxide dust even when exposed to the hydrogen chloride gas.

### (Hydrogen Chloride Gas Exposure Test)

A piece of adsorbent filter medium 20 mm in diameter having a honeycomb structure was cut out and its weight was measured. Then the cut out piece of adsorbent filter medium was installed in a Teflon tube having an inner diameter of 20 mm. A mixture of hydrogen chloride and dry air (gas prepared so that the hydrogen chloride content was 1 ppm) was introduced into the Teflon tube at a face velocity of 0.5 m/s and passed therethrough for one hour. The mixed gas which had passed through the adsorbent filter medium was blown into 10 milliliters of 1% hydrofluoric acid, solution scavenged, and concentrated, after which an ICP emission analysis was conducted to measure the boron content. The method of expression was the same as that in the hydrogen fluoride gas exposure test.

### EXAMPLE 6

A flat honeycomb structure F was prepared using the same method as in Example 5 except that alumina fiber (boric oxide content of 0.1 ppm) was used instead of ECR fiber, and the same hydrogen chloride gas exposure test was conducted. It was confirmed that the boron compound content in the adsorbent filter medium treated gas was equal to or less than the measurable limit with analytical instruments and there was no generation of boric oxide dust even when exposed to the hydrogen chloride gas.

### COMPARATIVE EXAMPLE 4

A flat honeycomb structure G was prepared using the same method as in Example 5 except that E glass fiber (boric oxide content of 6.5%) was used instead of ECR fiber, and the same hydrogen chloride gas exposure test was conducted. The boron content in the adsorbent filter medium treated gas was 0.18 mg per 1 g of adsorbent filter medium.

### EXAMPLE 7

### (Manufacture of Adsorbent Filter Medium (Honeycomb Structure))

Aramid fiber (boric oxide content of 0 ppm) was dispersed in a solution to which 3 wt% polyvinyl alcohol as a binder in the slurry had been added. The papermaking process was then performed according to the usual method using a cylinder machine so as to obtain organic paper. An active carbon coated organic paper was then prepared by coating the organic paper with 70 g/m² of (spheroid) active carbon and drying it. This active carbon coated organic paper was then divided into that which was to undergo the corrugation process and that which was not. That which was to undergo the corrugation process was corrugated by being passed between a pair of upper and lower corrugated rollers. A vinyl acetate system adhesive was applied to the peaks of this corrugated active carbon coated organic paper which was then laid together with and laminated to the flat active carbon coated organic paper that had not undergone the corrugation process. This was then repeated until a flat honeycomb structure which was a laminated body with a corrugation pitch of 2.0 mm and a peak height of 0.9 mm was obtained. A sulfuric acid impregnated honeycomb structure H was then obtained by submersing this flat honeycomb structure in an aqueous 10% sulfuric acid solution for one hour, taking it out and drying it at a temperature of 120°C, and then removing the organic elements from within the laminated body. An ammonia gas exposure test with the following conditions was then conducted on the honeycomb structure H and the boron content in the adsorbent filter medium treated gas was measured. It was confirmed that the boron content in the adsorbent filter medium treated gas was equal to or less than the measurable limit with analytical instruments and there was no generation of boron compound even when exposed to the ammonia gas.

### (Ammonia Gas Exposure Test)

A piece of adsorbent filter medium 20 mm in diameter having a honeycomb structure was cut out and its weight was measured. Then the cut out piece of adsorbent filter medium was installed in a Teflon tube having an inner diameter of 20 mm. A mixture of ammonia gas and dry air (gas prepared so that the ammonia content was 1 ppm) was introduced into the Teflon tube at a face velocity of 0.5 m/s and passed therethrough for one hour. The mixed gas which had passed through the adsorbent filter medium was blown into 10 milliliters of 1% hydrofluoric acid, solution scavenged, and concentrated, after which an ICP emission analysis was conducted to measure the boron content. The method of expression was the same as that in the hydrogen fluoride gas exposure test.

### COMPARATIVE EXAMPLE 5

A flat honeycomb structure I was prepared using the same method as in Example 7 except that E glass fiber (boric oxide content of 8.1%) was used instead of aramid fiber, and the same ammonia gas exposure test was conducted. The boron content in the adsorbent filter medium treated gas was 0.37 mg per 1 g of adsorbent filter medium.

### EXAMPLE 8

### (Combination of Honeycomb Structured Chemical Filter and Filter Material)

The piece of adsorbent filter medium (honeycomb structure) in Example 2 was cut out in a cylinder (diameter: 10 mm, thickness:
10 mm) and a cylindrical filter was prepared by adhering a stainless steel sheet as the casing to the outer face of the cylinder. Meanwhile, a composite chemical filter was prepared by disposing a PTFE film with an average aperture diameter of 0.3 µm that has a particulate capture efficiency of 99.7% downstream of the adsorbent filter medium so that the adsorbent filter medium treated gas passes through the PTFE film without leaking.

In the first invention, an inorganic fiber base paper with large amount of active carbon deposited thereon obtained by charging high ratio of active carbon so as to close the voids between the fibers when active carbon, for example, is deposited on inorganic fiber base paper having an interfiber void fraction of 80 to 95%. Then after a corrugated honeycomb structure is formed, a gas reactant is deposited thereon, thereby enabling the amount of reactant deposited to be increased, enabling the invention to have remarkably superior removal performance with respect to gaseous contaminants. Furthermore, the adsorbent filter medium is of a corrugated honeycomb structure which further reduces pressure loss and increases the life of the filter.

Also, according to the second invention, in a chemical filter provided with an adsorbent filter medium for removing gaseous impurities and so forth in the air, the adsorbent filter medium is constructed as a corrugated honeycomb structure comprising fiber material and contains substantially no boric oxide. This makes it possible to eliminate the discharge of boron compounds, or dopants, which are harmful substances that are particularly detrimental to semiconductors and precision electronic components, and therefore improve the yield of semiconductors and precision electronic components manufactured.

## Claims

1. A chemical filter of a corrugated honeycomb structure provided with an adsorbent filter medium for removing gaseous impurities and agglutinating organic substances in the air, wherein said adsorbent filter medium is a fiber base paper having an interfiber void ratio of 80 to 95% on which a gas adsorbent or a gas adsorbent and a gas reactant has been deposited.

2. A chemical filter according to claim 1, wherein said gas adsorbent is active carbon or zeolite, and a deposition amount of the active carbon or zeolite per unit area of said fiber base paper ranges from 40 to 150 g/m².

3. A chemical filter according to claim 1 or claim 2, wherein said gas reactant is inorganic salt or inorganic acid.

4. A chemical filter according to any one of claims 1 through 3, wherein said fiber base paper comprises one or two or more types of material selected from the group consisting of glass fiber, ceramic fiber, alumina fiber, mullite fiber, silica fiber, and organic fiber.

5. A method of manufacturing a chemical fiber, comprising the steps of:
depositing active carbon or zeolite on fiber base paper having an interfiber void ratio of 80 to 95% such that the amount of active carbon or zeolite deposited ranges from 40 to 150 g/m² per unit area of said fiber base paper;
forming said fiber base paper upon which the active carbon or zeolite has been deposited into a corrugated honeycomb structure; and
depositing a gas reactant on said corrugated honeycomb structure.

6. A method of manufacturing a chemical filter, comprising the steps of:
depositing active carbon on fiber base paper having an interfiber void ratio of 80 to 95% such that an water-absorption amount becomes 100 to 160 g/m²,
forming said fiber base paper upon which the active carbon has been deposited into a corrugated honeycomb structure with one or more types of adhesive selected from the group consisting of an organic system adhesive and an inorganic system adhesive which do not react with a gas reactant for absorbing basic gas; and
depositing a gas reactant for absorbing basic gas on said corrugated honeycomb structure.

7. A method of manufacturing a chemical filter according to claim 6, wherein:
said organic system adhesive is one or more types selected from the group consisting of phenol system resin, epoxy system resin, acrylic system resin and a copolymer of these, and
said inorganic system adhesive is one or more types selected from the group consisting of silica sol and alumina sol.

8. A chemical filter provided with an adsorbent filter medium for removing gaseous impurities and agglutinating organic substances in the air, wherein said adsorbent filter medium is a corrugated honeycomb structure comprising fiber material and contains substantially no boric oxide.

9. A chemical filter according to claim 8, wherein said adsorbent filter medium comprises one or two or more materials selected from the group consisting of glass fiber containing substantially no boron, ceramic fiber, alumina fiber, mullite fiber, silica fiber, and organic fiber, and contains substantially no boric oxide.

10. A chemical filter according to claim 8 or 9, wherein said adsorbent filter medium is such that when a gas having a hydrogen fluoride content of 1 ppm is passed through said adsorbent filter medium at a face velocity of 0.5 m/s for one hour, a boron content in gas which has passed through the filter is equal to or less than 1 µg per 1 g of said adsorbent filter medium.

11. A chemical filter according to any one of claims 8 through 10, wherein filter material for capturing at least minute particulates generated by said adsorbent filter medium is disposed downstream of said adsorbent filter medium.
